# EUROPEAN PATENT APPLICATION

(11) **EP 1 650 936 A2**
(43) Date of publication of application: **26.04.2006**
(21) Application number: 05022607.5
(22) Date of filing: 17.10.2005
(51) Int. Cl.: H04M 1/247, G09G 5/00

(54) **Terminal device and information display method**

(30) Priority: 20.10.2004 JP 2004305055
(71) Applicant: NEC CORPORATION, Tokyo (JP)
(72) Inventor: Kameyama, Hidehiko, Tokyo (JP)
(74) Representative: von Samson-Himmelstjerna, Friedrich

(57) **Abstract**

A terminal device having an information display unit, the device includes an input unit, a storage unit for storing first information displayed on the display unit and second information corresponding to the first information, and a control unit for replacing information in a specified area of the area occupied by the first information displayed on the information display unit with second information corresponding to the information in the specified area of the area occupied by the first information displayed on the display.

## Description

### BACKGROUND OF THE INVENTION

### 1. Field of the Invention

The present invention relates to a technique for displaying a character such as a letter or a symbol or an image on a display unit of a terminal device.

### 2. Description of the Related Art

A terminal device such as a mobile phone, a personal handyphone system (PHS), a personal digital assistant (PDA), or a home computer has a display unit for displaying information. Some display units have a function of enlarging a displayed letter or image.

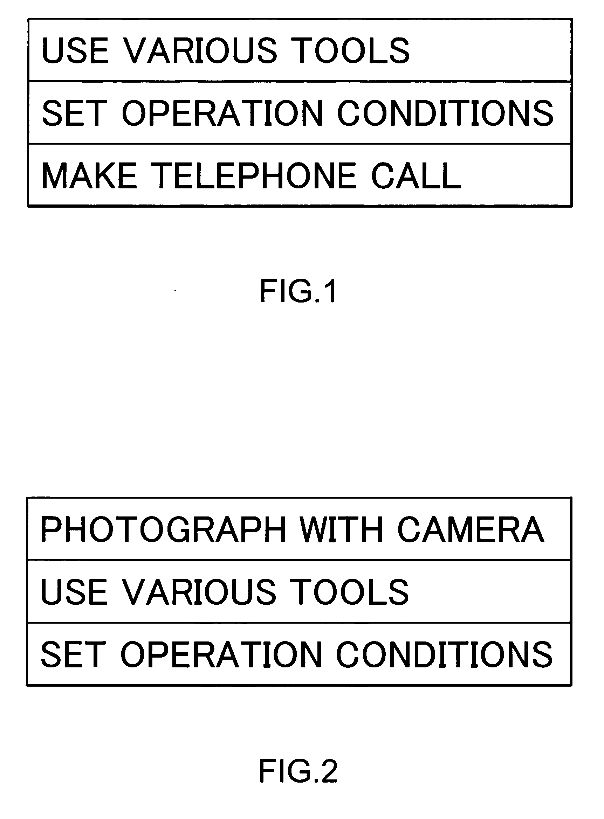

FIG. 1 shows an example of operation menu. In this example, among items of the terminal operationmenu, an item "set operation conditions" selected by a user is enlarged and displayed. However, at this time, among the items of the terminal operation menu, other items are also enlarged simultaneously. Therefore, only three menu items are displayed on the display unit of the terminal. In this case, when the terminal user wants to select an item "photograph with camera", the user needs to scroll the display screen to display a screen as shown in FIG. 2.

On the other hand, a display method requiring no scroll is proposed. According to a method disclosed in JP 2000-284774 A, when a terminal user enlarges and displays one of plural letter strings like menu items, for example, letter strings on both sides of the enlarged-size letter string are automatically reduced in size. At this time, all items of the menu are displayed on the display unit. However, with this method, letters of only the menu item displayed first are merely enlarged. The size of the terminal display unit is limited. Therefore, when all operation menu items are displayed on the display unit at once, abbreviated menu item names may be displayed. For example, a menu item "make telephone call" becomes just "telephone". Only after the terminal user selects "telephone" for accessing a telephone book and sees the next screen, the user realizes that the item represents "make telephone call". After that, the user returns to the starting menu screen and tries to find a menu item corresponding to the telephone book again.

In addition to the above document, JP 06-012047 A, JP 09-284365 A, and JP 10-023117 A disclose methods of enlarging letters and the like on the display unit.

### SUMMARY OF THE INVENTION

An object of the present invention is to provide a terminal device, a display method, and a computer readable storage medium storing a program for executing the method, with which a desired menu item of an abbreviated menu or various lists displayed on a display unit of a terminal device can be easily accessed in a short time.

Another object of the present invention is to provide a terminal device, a display method, and a computer readable storage medium storing a program for executing the method, with which data about an image or an enlarged image displayed on the display unit of the terminal device can be easily displayed.

The invention provides terminal devices having an information display unit and methods of displaying information on an information display unit of a terminal device. In accordance with one aspect of the invention, the terminal device includes an input unit, a storage unit for storing first information displayed on the information display unit and second information corresponding to the first information, and a control unit for replacing information in a specified area of the area occupied by the first information displayed on the information display unit with second information corresponding to the information in the specified area of the area occupied by the first information displayed on the information display. In accordance of another aspect of the invention, the terminal device includes an input unit, a storage unit for storing information which includes a character and is displayed on the information display unit, and a control unit for enlarging the character in a specified area of the information displayed on the information display unit. The storage unit stores the character as scalable font data.

Regarding another aspect of the invention, a method of displaying information on the information display unit of the terminal device includes steps of displaying predetermined information on the information display unit, specifying a part of an area of the information displayed on the information display unit, and enlarging the specified area and a character displayed on the specified area.

Regarding another aspect of the invention, a method of displaying information on the information display unit of the terminal device includes steps of specifying a part of an area of the information displayed on the information display unit and enlarging an image displayed in the specified area.

The invention provides a computer readable storage medium storing a program including steps for performing a method for displaying information on an information display unit of a terminal device, including a step of displaying predetermined information on the information display unit, a step of specifying a part of an area of the information displayed on the information display unit, and a step of enlarging the specified area and a character displayed on the specified area.

According to the present invention, the terminal device user can access the desired menu item of the menu or various lists displayed on the display unit in a short time. Also, the user can easily check the data about the displayed image and can easily see an enlarged image.

### BRIEF DESCRIPTION OF THE DRAWINGS

The above and other objects, features and advantages of the present invention will become apparent from the following detailed description when taken with the accompanying drawings in which:
FIG. 1 shows an example of an enlarged-size operation menu item of a terminal device;
FIG. 2 shows another example of an enlarged-size operation menu item of a terminal device;
FIG. 3 is a block diagram of a mobile phone as an example of a terminal device of the present invention;
FIG. 4 is a plan view of the mobile phone shown in FIG. 3;
FIG. 5 shows an example of an operation menu including normal-size letters; .
FIG. 6 shows an example of an operation menu including enlarged-size letters;
FIG. 7 shows an example of a read only memory storing characters etc.;
FIG. 8 shows an example of a method of displaying an operation menu;
FIG. 9 shows an example of a menu with one item enlarged and displayed in detail;
FIG. 10 shows another example of a menu with one item enlarged and displayed in detail;
FIG. 11 shows an example of a menu with a particular item enlarged and the other items reduced;
FIG. 12 shows another example of a read only memory storing characters etc.;
FIG. 13 shows another example of a method of displaying an operation menu;
FIG. 14 shows an example of a memory storing an image;
FIG. 15 shows an example of a method of displaying an image;
FIG. 16 shows an example of a normal-size image of a mountain;
FIG. 17 shows an example of an image of a mountain including an enlarged image; and
FIG. 18 shows an example of an image of a mountain including an enlarged image on which characters are displayed.

### DESCRIPTION OF THE PREFERRED EMBODIMENTS

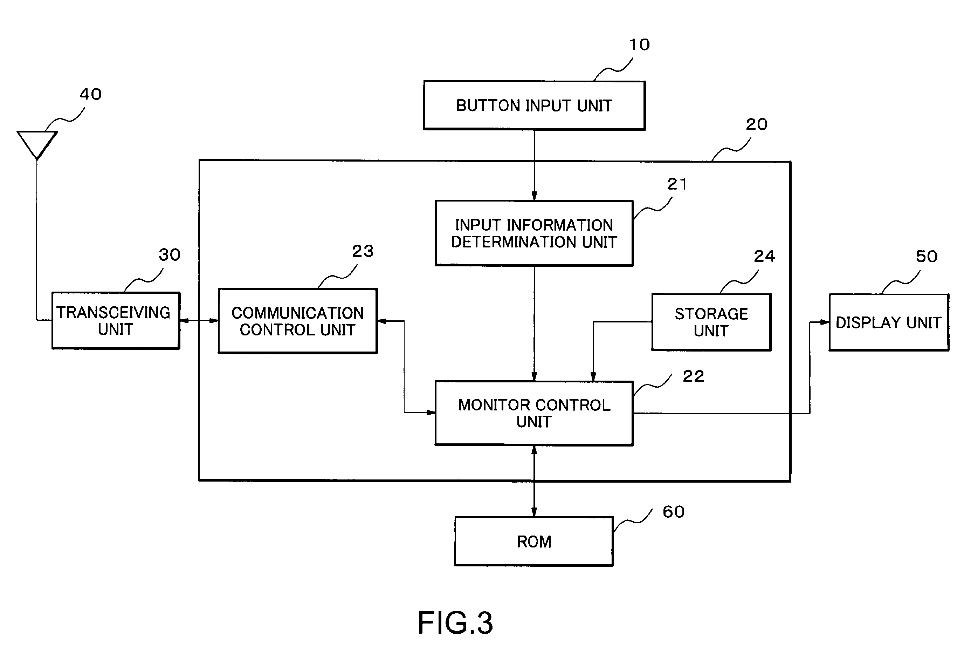

Preferred embodiments of the present invention will be described below. FIG. 3 is a block diagram of a mobile phone as an example of a terminal device of the present invention. The mobile phone includes a button input unit 10, a control unit 20, a transceiving unit 30, an antenna unit 40, a display unit 50, and a read only memory (ROM) 60. The control unit 20 controls the transceiving unit 30 and the display unit 50 based on information input from the button input unit 10. The mobile phone can include a semiconductor memory storing an image (not shown) . The ROM 60 stores characters such as letters and symbols constituting various lists and an operation menu displayed on the display unit 50. The present invention is applicable to a personal handyphone system (PHS), a personal digital assistant (PDA), or a home computer, in addition to the mobile phone.

The control unit 20 includes an input information determination unit 21, a monitoring and controlling unit 22, a communication control unit 23, and a storage unit 24. The input information determination unit 21 determines a type of information input from the button input unit 10 (i.e., a type of a pushed button). The monitoring and controlling unit 22 monitors states of respective devices in the mobile phone based on the input information and sends control signals to the devices. The communication control unit 23 controls communication with a base station. The storage unit 24 stores a program for executing information display on the display unit 50. The monitoring and controlling unit 22 controls the display unit 50 and the ROM 60 based on the program.

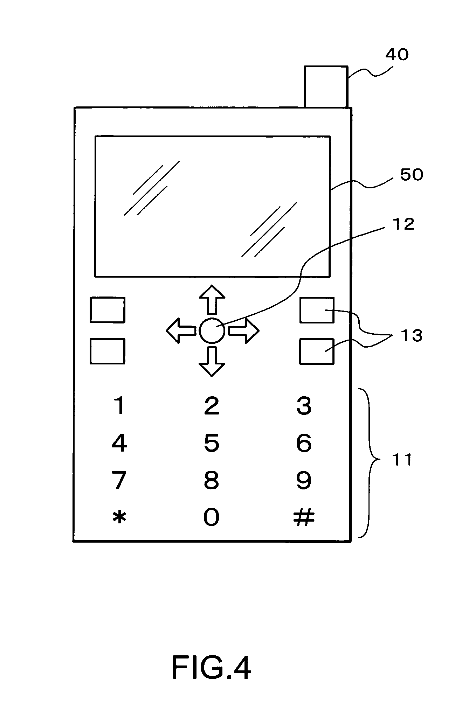

FIG. 4 is a plan view of the mobile phone exemplified in FIG. 3. The mobile phone includes as the button input unit 10, dial buttons 11 including number buttons and symbol buttons, direction buttons 12, and function buttons 13. The user uses the direction buttons 12 to place a cursor on a letter string or an area including a letter string displayed on the display unit 50 to thereby specify a particular area of an image to be displayed or change displayed information. The user uses the function buttons 13 to display an operation menu, a telephone book, a received mail list, etc.

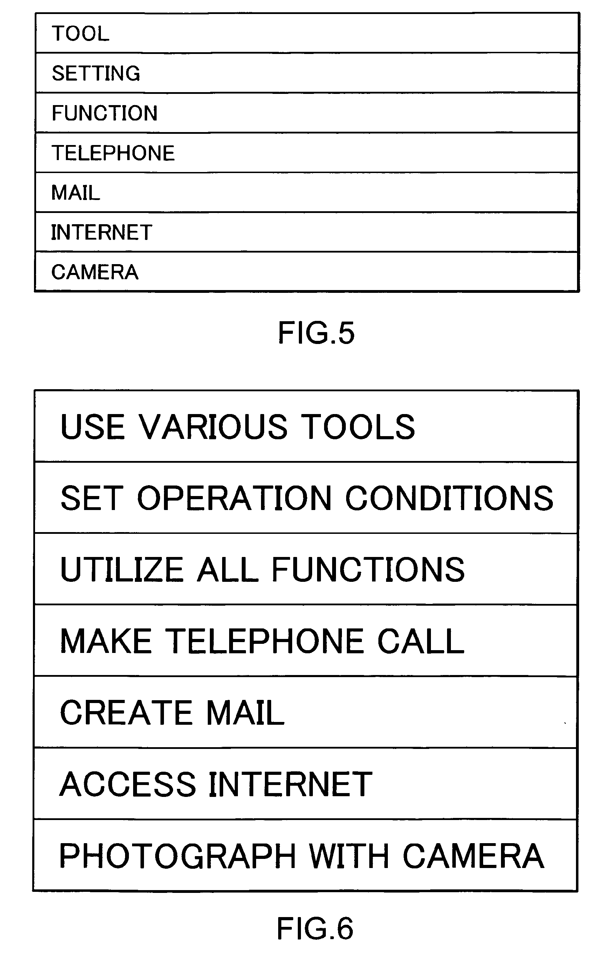

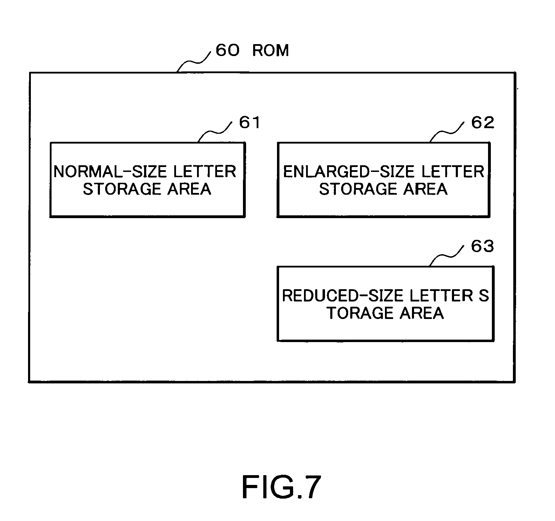

Next, an example of a method of displaying information on the display unit 50 will be displayed. FIG. 5 shows an example of the operation menu as information displayed on the display unit 50. The display information includes the telephone book, the received mail list, etc. The operation menu exemplified in FIG. 5 is an example of an abbreviated operation menu which is displayed first when the user presses a predetermined one of the function buttons 13. The menu includes items of "tool", "setting", "function", "telephone", "mail", "internet", "camera", and others. Those letter strings have a normal letter size stored in a normal-size letter storage area 61 in the ROM 60. FIG. 6 shows an example of operation menu items displayed in detail corresponding to the respective operation menu items shown in FIG. 5. The items displayed in detail include "use various tools", "set operation conditions", "utilize all functions", "make telephone call", "create mail", "access internet", and "photograph with camera" corresponding to the respective items described above. All letters or a letter in a particular word in the detailed menu items has a size larger than the letter exemplified in FIG. 5. The detailed operation items are stored in an enlarged-size letter storage area 62 in the ROM 60. Further, the ROM 60 stores menu items having the same expressions as those shown in FIG. 5 and including a reduced-size letter in a reduced-size letter storage area 63. FIG. 7 shows an example of the ROM 60 storing various menu items.

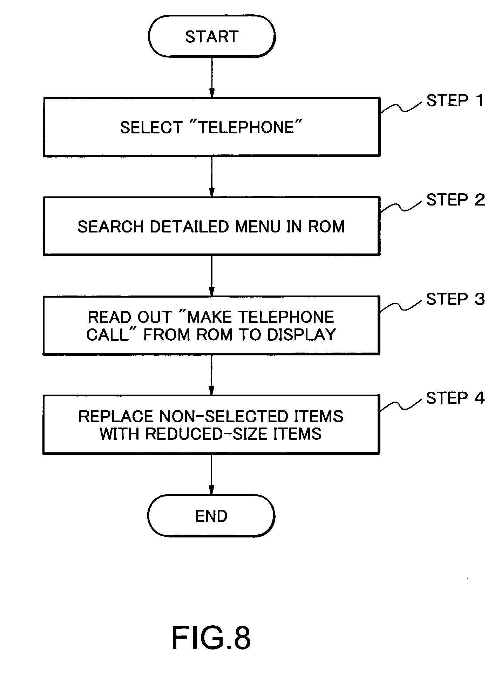

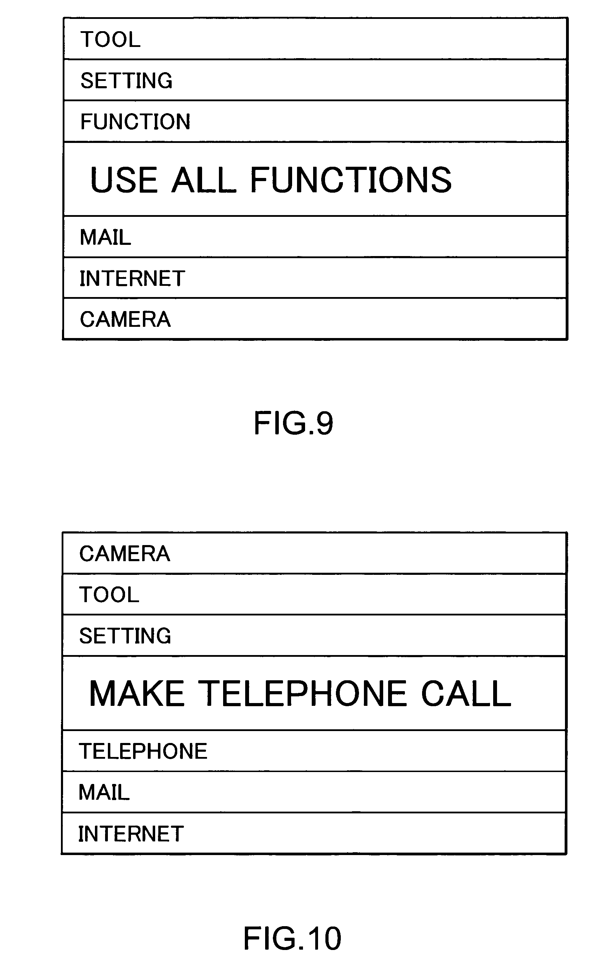

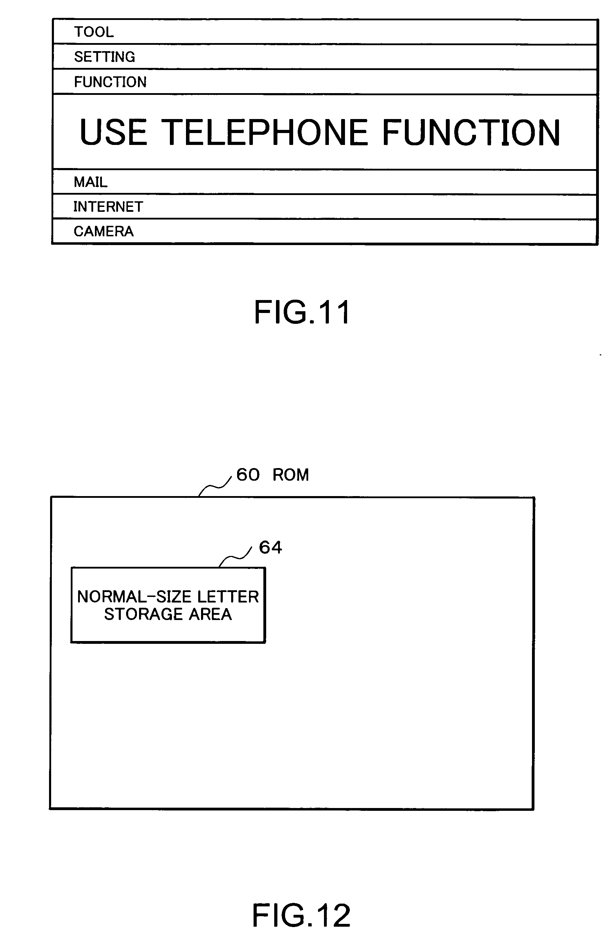

FIG. 8 shows an example of a method of displaying an operation menu. First, when the user presses any one of the function buttons 13, the abbreviated operation menu exemplified in FIG. 5 appears on the display unit 50. Specifically, the input information determination unit 21 detects that any one of the function buttons 13 is pressed and notifies the monitoring and controlling unit 22 of the detection result. The monitoring and controlling unit 22 reads out the abbreviated operation menu including a normal-size letter string from the normal-size letter storage area 61 in the ROM 60 to display it on the display unit 50. Next, the user uses the direction buttons 12 to select an item "telephone" from the displayed operation menu (Step 1). The input information determination unit 21 transmits the selection result to the monitoring and controlling unit 22. The monitoring and controlling unit 22 searches a menu displayed in detail, as exemplified in FIG. 6, and stored in the enlarged-size letter storage area 62 in the ROM 60 (Step 2). The monitoring and controlling unit 22 selects a menu item "make telephone call" corresponding to the item "telephone" and replaces the currently displayed "telephone" with "make telephone call" (Step3). Letters constituting "make telephone call" are larger than those constituting "telephone" in size. At this time, an area where "telephone" is displayed in the first operation menu may be enlarged in order to display the enlarged-size letter string. FIG. 9 shows an example of the operation menu with the menu item "make telephone call" including the enlarged-size letters displayed. Other operation menu items which are not selected keep the same expressions as they are. FIG. 10 shows an example where another menu item is selected. In the example of FIG. 10, "function" is selected first. As a result, "utilize all functions" including the enlarged-size letter string or word is displayed. All letters or words in this expression are not necessarily enlarged. In this example, the non-selected menu items can be replaced by menu items including reduced-size letters, which are stored in the reduced-size letter storage area 63 (Step 4). FIG. 11 shows an example of the operation menu after Step 4 is executed. At this time, all the menu items displayed first can be displayed on the display unit 50.

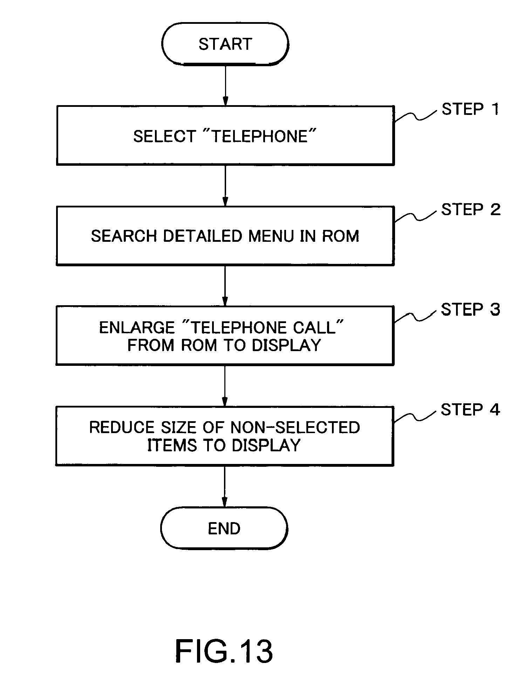

FIGS. 12 and 13 show another example of the method of displaying the operation menu. In the display method of this example, as shown in FIG. 12, the ROM 60 has a normal-size image storage area 64 storing an abbreviated operation menu like the operation menu shown in FIG. 5. Further, the normal-size storage area 64 has normal-size letters and can include an operation menu displayed in detail as shown in FIG. 6. In this example, the ROM 60 stores the letters etc. as scalable font data. The monitoring and controlling unit 22 can therefore enlarge and reduce the letters in the menu items.

FIG. 13 shows an example of a specific display method. Similarly to the above, the user first presses any one of the operation buttons 13 to display the abbreviated operation menu exemplified in FIG. 5 on the display unit 50. Next, the user uses the direction buttons 12 to select the item "telephone" from the displayed operation menu (Step 1). The input information determination unit 21 transmits the selection result to the monitoring and controlling unit 22. The monitoring and controlling unit 22 searches a detailed operation menu stored in the ROM 60 (Step 2). The monitoring and controlling unit 22 selects a menu item "telephone call" corresponding to the item "telephone" and enlarges the letters for display (Step 3) . At this time, according to the user's selection, the monitoring and controlling unit 22 can display "telephone" with the enlarged-size letters. Further, the monitoring and controlling unit 22 can display the non-selected menu items with the reduced-size letters (Step 4) . Similarly to the above, the area where "telephone call" is displayed on the display unit 50 may be enlarged to be larger than the area where "telephone" is displayed first. Also, not all the letters in the detailed menu item need to be enlarged. In this example, the ROM 60 does not need to store the operation menu including the reduced-size letters.

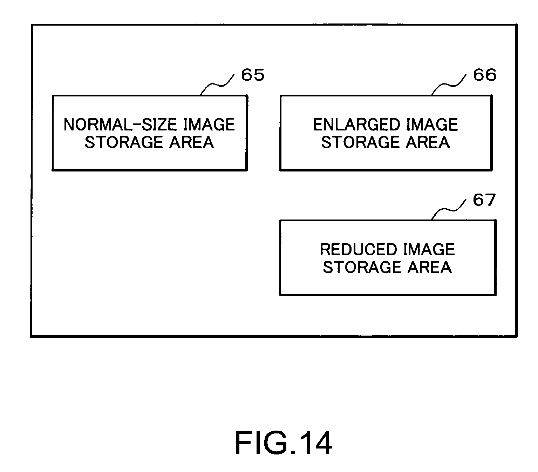

Hereinafter, an example of image display will be described. In this case, as shown in FIG. 14, a semiconductor memory storing an image or thememoryunit 24 includes, for example, anormal-size image storage area 65, an enlarged image storage area 66 storing an enlarged image obtained by enlarging a specific area of the normal-size image, and a reduced-size image storage area 67 storing a reduced-size image obtained by reducing an area other than the above-mentioned specific area of the image. When the monitoring and controlling unit 22 has an image enlargement function, the reduced-size image storage area 67 is unnecessary. The normal-size image storage area 65 stores, for example, image information such as various photographs and maps. The enlarged image storage area 66 stores an enlarged image including various characters in addition to the above-mentioned enlarged image. The characters are data of the image, for example. The user can select any of the enlarged images.

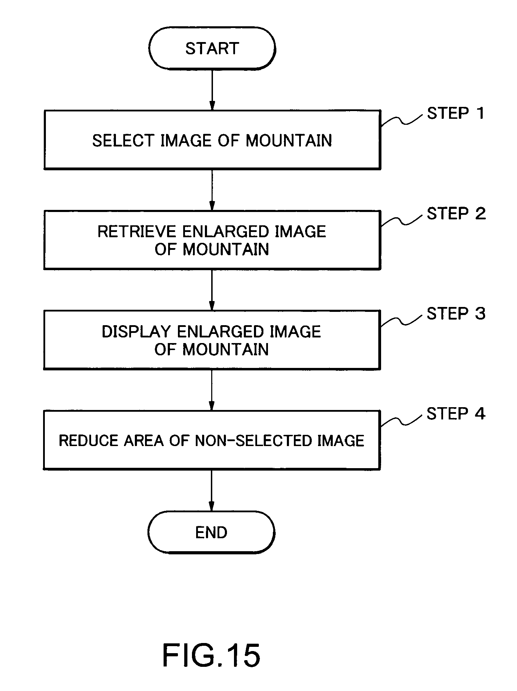

FIG. 15 shows an example of a method of displaying an image. First, based on a user's operation, the monitoring and controlling unit 22 reads out plural normal-size images from the normal-size image storage area 65 and displays the plural normal-size images on the display unit 50. The user uses the direction buttons 12 to select an image of a mountain from the plural normal-size images on the display unit 50 (Step 1) . The input information determination unit 21 notifies the monitoring and controlling unit 22 of that the mountain image is selected. Upon receiving the notification, the monitoring and controlling unit 22 accesses the enlarged image storage area 66 to retrieve an enlarged image of the center of the mountain corresponding to the mountain image selected by the user (Step 2). The enlarged image of a mountain can include a character indicating data on the image. The data on the image includes a date when the image is photographed. The monitoring and controlling unit 22 displays the enlarged image of the center of the mountain to be laid onto the image displayed first at a predetermined position (Step 3). The monitoring and controlling unit 22 can then access the reduced-size image storage area 67 to replace an area other than the image of the center of the mountain with the reduced-size image (Step 4).

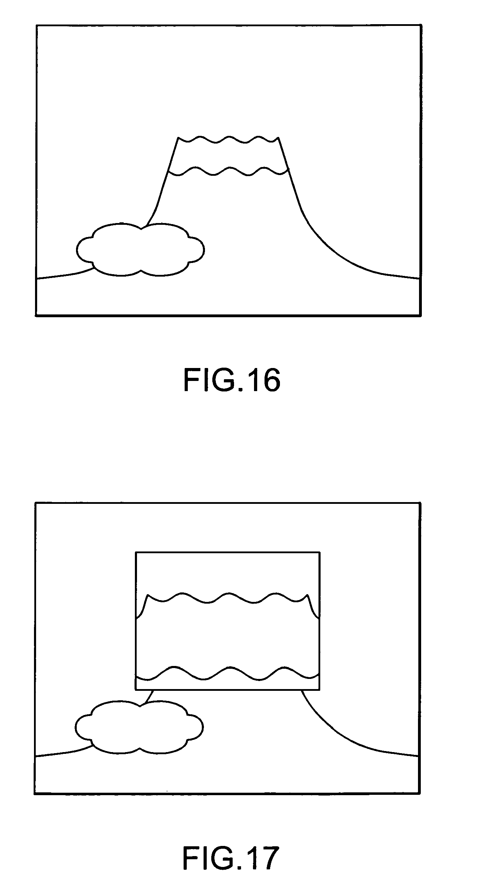

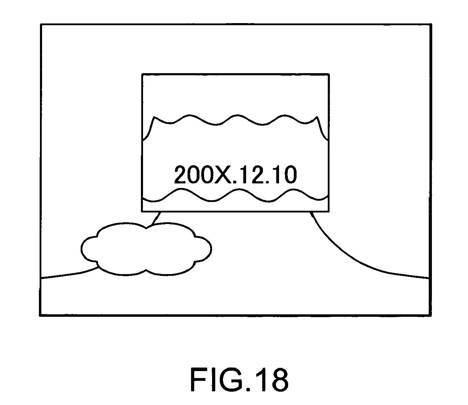

FIG. 16 shows an example of a normal-size image of a mountain. FIG. 17 shows an example of an image of a mountain including an enlarged image of a center of the mountain. FIG. 18 shows an example of an enlarged image of the center of the mountain including a character. In the above example, the user can easily check data on the displayed image.

In the above image display method, the normal-size image can be enlarged or reduced based on a known algorithm.

The control unit 20 which is a computer can execute menu display and image display based on an operation program stored in the storage unit 24.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

Further, it is the inventor's intent to retain all equivalents of the claimed invention even if the claims are amended during prosecution.

## Claims

1. A terminal device provided with an information display unit, comprising:
an input unit;
a storage unit for storing first information displayed on the information display unit and second information corresponding to the first information; and
a control unit for replacing information in a specified area of the area occupied by the first information displayed on the information display unit with second information corresponding to the information in the specified area of the area occupied by the first information displayed on the information display.

2. A terminal device according to claim 1, wherein the information includes a character.

3. A terminal device according to claim 2, wherein a number of the characters in the second information is larger than a number of the characters in the first information.

4. A terminal device according to claim 2, wherein a size of the character in the second information is larger than a size of the character in the first information.

5. A terminal device according to claim 1, wherein the information display unit has an area for displaying the second information after replacement, the area being larger than the specified area of the area occupied by the first information.

6. A terminal device according to claim 1, wherein:
the storage unit is provided with third information corresponding to the first information, the third information including a character whose size is smaller than a size of the character in the first information; and
the control unit replaces the first information in an area other than the specified area with the third information corresponding to the area other than the specified area.

7. A terminal device according to claim 6, wherein the information display unit has an area for displaying the third information after replacement, the area being smaller than the area for displaying the corresponding first information.

8. A terminal device according to claim 6, wherein the control unit replaces the first information in the area other than the specified area with the third information corresponding to the area other than the specified area, based on an input operation from the input unit.

9. A terminal device according to claim 2, wherein the character comprises at least one or more of a letter, a symbol, and a mark.

10. A terminal device according to claim 1, wherein the information comprises at least one of an operation menu, a telephone book, and a received mail list.

11. A terminal device according to claim 1, wherein the information includes an image.

12. A terminal device according to claim 11, wherein the second information includes an image obtained by enlarging a part of the image in the first information.

13. A terminal device according to claim 12, wherein the second information includes a character.

14. A terminal device according to claim 1, wherein the terminal device is one of a personal handyphone system (PHS), a personal digital assistant (PDA), and a computer.

15. A terminal device provided with an information display unit, comprising:
an input unit;
a storage unit for storing information which includes a character and is displayed on the information display unit; and
a control unit for enlarging the character in a specified area of the information displayed on the information display unit,
wherein the storage unit stores the character as scalable font data.

16. A terminal device according to claim 15, wherein:
the storage unit stores first information including characters small in number and second information including characters large in number; and
the control unit enlarges the character of the second information corresponding to the specified area of the first information which is displayed first.

17. A terminal device according to claim 16, wherein:
the storage unit stores an image; and
the control unit has a function of enlarging a part of the displayed image.

18. A terminal device according to claim 17, wherein the enlarged image has a character displayed.

19. A terminal device according to claim 17, wherein:
the storage unit stores the image and an enlarged image of the part of the image; and
the control unit replaces a specified area of the displayed image with the enlarged image.

20. A terminal device according to claim 19, wherein the enlarged image has a character displayed.

21. A terminal device according to claim 15, wherein the information at least includes one of an operation menu, a telephone book, and a received mail list.

22. A terminal device according to claim 15, wherein the control unit enlarges a size of the specified area on the information display unit.

23. A terminal device according to claim 15, wherein the control unit reduces the character in an area other than the specified area.

24. A terminal device according to claim 15, wherein the terminal device is one of a personal handyphone system (PHS), a personal digital assistant (PDA), and a computer.

25. A terminal device according to claim 15, wherein the character includes at least one of a letter, a symbol, and a mark.

26. A method of displaying information on an information display unit of a terminal device, comprising:
displaying predetermined information on the information display unit;
specifying a part of an area of the information displayed on the information display unit; and
enlarging the specified area and a character displayed on the specified area.

27. A method according to claim 26, wherein the enlarged character is previously stored in the terminal device.

28. A method according to claim 26, wherein the character is previously stored in the terminal device as scalable font data.

29. A method according to claim 27, wherein the number of enlarged-size characters is larger than the number of the first-displayed characters.

30. A method according to claim 26, further comprising reducing an area other than the specified area of the displayed information and the character in the area other than the specified area.

31. A method of displaying information on an information display unit of a terminal device, comprising:
specifying a part of an area of the information displayed on the information display unit; and
enlarging an image displayed in the specified area.

32. A method according to claim 31, wherein the enlarged image includes a character.

33. A method according to claim 32, wherein the enlarged image is previously stored in the terminal device.

34. A computer readable storage medium storing a program including steps for performing a method for displaying information on an information display unit of a terminal device, comprising:
a step of displaying predetermined information on the information display unit;
a step of specifying a part of an area of the information displayed on the information display unit; and
a step of enlarging the specified area and a character displayed on the specified area.

35. A computer readable storage medium storing a program including steps for performing a method for displaying information on an information display unit of a terminal device according to claim 34, further comprising a step of reducing the character in an area other than the specified area of the displayed information.

36. A computer readable storage medium storing a program including steps for performing a method for displaying information on an information display unit of a terminal device according to claim 34, wherein the enlarged-size character is previously stored in the terminal device.

37. A computer readable storage medium storing a program including steps for performing a method for displaying information on an information display unit of a terminal device according to claim 34, wherein the character is previously stored in the terminal device as scalable font data.

38. A computer readable storage medium storing a program including steps for performing a method for displaying information on an information display unit of a terminal device according to claim 36, wherein the number of enlarged-size characters is larger than the number of the first-displayed characters.
